# EUROPEAN PATENT APPLICATION

(11) **EP 2 782 352 A1**
(43) Date of publication of application: **24.09.2014**
(21) Application number: 13159859.1
(22) Date of filing: 19.03.2013
(51) Int. Cl.: H04N 21/433, H04N 21/454

(54) **Image display apparatus and image display method**

(71) Applicant: Kabushiki Kaisha Toshiba, Minato-ku Tokyo 105-8001 (JP)
(72) Inventor: Kimura, Takahiro, Minato-ku Tokyo, 105-8001 (JP)
(74) Representative: Henkel, Breuer & Partner

(57) **Abstract**

According to one embodiment, an image display apparatus includes a recording controller (35c) configured to record a broadcast program, and a list display (35) configured to display a list of information related to a recorded program wherein the information is displayed with discrimination display of viewing-restriction.

## Description

Embodiments described herein relate generally to an image display apparatus and an image display method for displaying information concerning a television broadcast.

Some standards of digital television broadcast impose restrictions on viewing a program which is inappropriate for a person under 18 years old for example, and watching and listening are permitted after it is ensured, by PIN input, that the person is over 18 years old. Hence, a broadcast station adds viewing restriction information to such a program and broadcasts the program. When a selected program has the viewing restriction information, the television receiving apparatus displays a PIN input screen. The television receiving apparatus includes a function for displaying an electronic program list, but a program which is viewing-restricted is displayed also in the electronic program list such that the program can be discriminated from other programs.

However, the conventional viewing restriction limits only action of watching and listening of a television broadcast. In recent years, television programs are popularly recorded in a hard disk drive, but presence or absence of viewing restriction cannot be discriminated in the display of the recorded program listening. Since the viewing restriction information is included in a recorded program, presence or absence of viewing restriction cannot be discriminated until the recorded program is actually played back.

It is an object of the invention to provide an image display apparatus and an image display method for clearly indicating whether or not a recorded program is viewing-restricted.
FIG. 1 is an exemplary block diagram showing a configuration of an image display apparatus according to an embodiment.
FIG. 2 is an exemplary plan view showing a configuration of a remote controller of the image display apparatus of the embodiment.
FIG. 3 is an exemplary flowchart showing a flow of recording processing in the embodiment.
FIG. 4 is an exemplary diagram showing a banner display of program information in the embodiment.
FIG. 5 is an exemplary diagram showing a program description display in the embodiment.
FIG. 6 is an exemplary diagram showing a program list in the embodiment.
FIG. 7 is an exemplary flowchart showing a flow of display processing of a recorded program list in the embodiment.
FIG. 8 is an exemplary diagram showing a recorded program list in the embodiment.
FIG. 9 is an exemplary diagram showing a display of G mark of recorded programs in various periods of time in the embodiment.
FIG. 10 is an exemplary flowchart showing a flow of replaying processing in the embodiment.

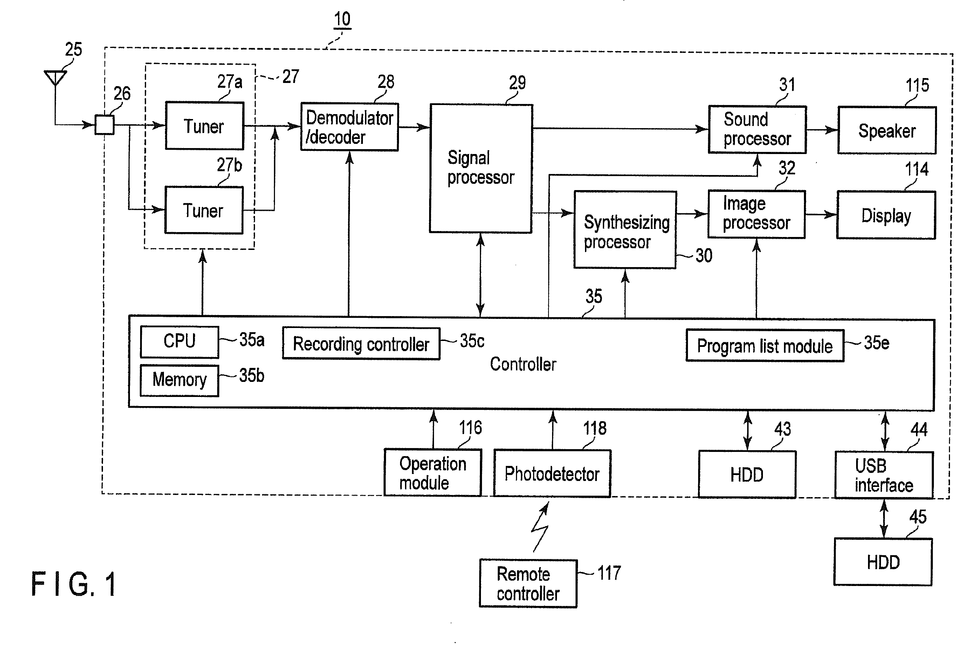

An embodiment will be described below with reference to the drawings. FIG. 1 shows an outline of a signal processing system of a television receiving apparatus 10 having a recording function as the embodiment.

Mounted on a cabinet (casing) of the television receiving apparatus 10 are a display 114 which is a flat panel type display including a liquid crystal display panel or a plasma panel for example, a speaker 115, an operation module 116, and a photodetector 118 which receives operation information sent from a remote controller 117.

A digital television broadcast signal (broadcast wave) received by an antenna 25 is supplied to a tuner 27 through an input terminal 26. A broadcast signal of a desired channel is selected by the tuner 27. The tuner 27 can includes a plurality of tuners, and in this embodiment, the tuner 27 includes a tuner 27a and a tuner 27b. Since the two tuners 27a and 27b can select stations, the television receiving apparatus 10 can record at least two programs of the same time period at the same time. The tuner 27 may include more tuners.

A broadcast signal selected by the tuner 27 is supplied to a demodulator/decoder 28, and a digital video signal, a digital audio signal and digital attribute information (including guidance descriptor) are output to a signal processor 29. The signal processor 29 subjects the digital video signal and the digital audio signal supplied from the demodulator/decoder 28 to predetermined digital signal processing.

The guidance descriptor describes a program which is desired to be viewing-restricted by a broadcaster. As an example of the viewing-restricted, a person under 18 years old is not permitted to watch a certain program, and after it is ensured that the person is over 18 years old, the person is permitted to watch the program. The television receiving apparatus provides viewers with guidance showing that a program is viewing-restricted in accordance with a received guidance descriptor by (i) displaying programs which are viewing-restricted in a program list or a recorded program list in a discriminable manner, by (ii) strobe lighting display of a program, or by (iii) displaying a text or a mark describing viewing restriction in a superimposed manner on display of a program. If this guidance is always provided, viewers may feel busy, and it is possible to set whether time for giving the guidance is limited to a certain time period or time for giving the guidance is not limited (guidance is always given for 24 hours) based on guidance types. It is possible to omit the guidance during a time period when persons over 18 years old frequently watch. For example, the guidance may be omitted during a time period from 21:00 to 5:30, and the guidance may be given during a time period from 5:30 to 21:00. In the case of a guidance type 1, guidance is always given, in the case of a guidance type 2, guidance is omitted during the time period from 21:00 to 5:30, and the guidance is given only during the time period from 5:30 to 21:00. In the case of a guidance type 0, a screen requiring PIN input is displayed only during the time period from 5:30 to 21:00, and the PIN input is not required during the time period from 21:00 to 5:30.

Details of guidance descriptor are as follows.

| descriptor_tag | This shall be assigned to be [0x89]. |
|---|---|
| descriptor_length | The descriptor length is an 8-bit field specifying the total number of bytes of the data portion of the descriptor following the byte defining the value of this field. |
| reserved | "Reserved" bits shall be set to "0". |
| guidance_type | This 2-bit field specifies the guidance type defined in the descriptor. Only guidance types zero and one are currently defined, the other values are reserved for future use. The descriptor has been defined so that it can be extended in a backward compatible way at a later date. |
| ISO_639_language_code | This 24-bit field contains the ISO 639 Part 2 three-character language code of the language of the following guidance text field. Both ISO 639.2/B and ISO 639.2/T may be used. Each character is coded into 8-bits according to ISO 8859-1 and inserted in order into the 24-bit field. For example Gaelic has the 3-character code "gla". |
| char | This is an 8-bit field. A string of char fields specify the guidance information. |
| guidance_mode | This 1-bit field is used within the guidance_type "1" loop. It shall be set to "1" if guidance for content unsuitable for broadcast until after the watershed is appropriate. |
| reserved for future_use | These bytes are reserved for future use and may contain any possible value. |

The guidance descriptor is used to label events with guidance for the viewer. The descriptor contains a text field which contains the guidance text for the event e.g. "Contains strong language and scenes which some may find upsetting". It is also used to enable access controls for programmes broadcast before the watershed. The watershed is defined by OFCOM in The Ofcom Broadcasting Code 2008: Protecting the Under-Eighteens. The watershed only applies to television. The watershed is at 2100 (local time). Material unsuitable for children should not, in general, be shown before 2100 or after 0530 (local time). Subscription services may have a different watershed.

The guidance text carried in the char field shall be displayed as information for the viewer.

The maximum length of the guidance text shall be 75 characters. An editorially appropriate text string longer than zero characters shall always be present if the descriptor is in use.

Broadcasters shall use guidance_type=0 to signal content which they deem unsuitable for broadcast until after the watershed.

guidance_type=1 can be applied at any time to signal content with guidance, such as strobe lighting. It may additionally signal content unsuitable for broadcast until after the watershed.

The signal processor 29 outputs a digital video signal to a synthesizing processor 30, and outputs a digital audio signal to an audio processor 31. The synthesizing processor 30 outputs an OSD (on screen display) signal to a video processor 32 in a superimposed manner on a digital video signal supplied from the signal processor 29.

The image processor 32 converts the input digital video signal into a format which can be displayed by a display apparatus (display 114) of a subsequent stage. The image processor 32 performs various image quality processing including later-described super-resolution processing and moving image improving processing. An video signal which is output from the image processor 32 is supplied to the display 114 and an image is displayed.

The audio processor 31 converts the input digital audio signal into a audio signal of a format which can be played back by the speaker 115 of a subsequent stage. The audio signal which is output from the audio processor 31 is supplied to the speaker 115 and sound is played back.

In the television receiving apparatus 10, all of operations including various kinds of receiving operations and station-selection operations are controlled in a centralized manner by a controller 35. A CPU (central processing unit) 35a is incorporated in the controller 35, the controller 35 receives an operation signal from the operation module 116 (e.g., operation switch provided on a side surface of a body casing) disposed on a body of the television receiving apparatus 10, or receives an operation signal which is sent from the remote controller 117 and which is received by the photodetector 118, and controls the various components so that the operation contents are reflected.

The controller 35 utilizes a memory 35b when the controller 35 controls the various components. The memory 35b mainly includes a ROM (read only memory) in which a control program executed by the CPU 35a is stored, a RAM (random access memory) for providing the CPU 35a with an operation area, and a nonvolatile memory in which various kinds of setting information and control information are stored. Data for displaying later-described program information, registered recording-reservation information and various menus is stored in the memory 35b. An event ID included in later-described program information is also included in the recording-reservation information.

A recording controller 35c is included in the controller 35. The recording controller 35c controls a recording operation of a program selected by the tuner 27. For example, an internal HDD (hard disk drive) 43 built into the television receiving apparatus 10 may be connected to the controller 35, or an external HDD 45 may be connected to the controller 35 through a USB interface 44. Alternatively, a HDD recorder which is externally connected through an interface such as HDMI may be connected to the controller 35. Based on user's operation of the operation module 116 or the remote controller 117, the recording controller 35c controls such that a digital video signal and a digital audio signal obtained from the demodulator/decoder 28 are recorded in a storage medium such as the HDD 43 and the HDD 45. Contents data of a program, and attribute information including an video signal and a audio signal are recorded in a predetermined storage medium as different streams. Hence, the recording controller 35c can determine whether a program selected by the tuner 27 includes a guidance descriptor only by playing back the attribute information without playing back contents data of that program.

The recording controller 35c registers, in the memory 35b, recording-reservation information which is input in accordance with operation of the remote controller 117 and the like. If broadcasting of a reserved program is started, the recording controller 35c controls such that this program is recorded based on the registered recording-reservation information. The controller 35 includes a playback module which controls such that a program recorded in the storage medium such as the HDD 43 and the HDD 45 is played back.

By operating a cursor on the electronic program list or performing a determination action by a user in accordance with vertical keys and lateral keys of the remote controller 117, the recording controller 35c controls registration of recording reservation and recording execution of a program. An indicator indicating that a recording reservation is set is displayed for a recording-reserved program. A similar indicator (indicator showing that recording is being executed) may be displayed for a program which is being recorded.

The controller 35 includes a program list module 35e. The program list module 35e forms an electronic program list (EPG) based on electronic program list information included in broadcast wave received by the antenna 25. Program information such as a channel and a program's name configuring the EPG are stored in the memory 35b.

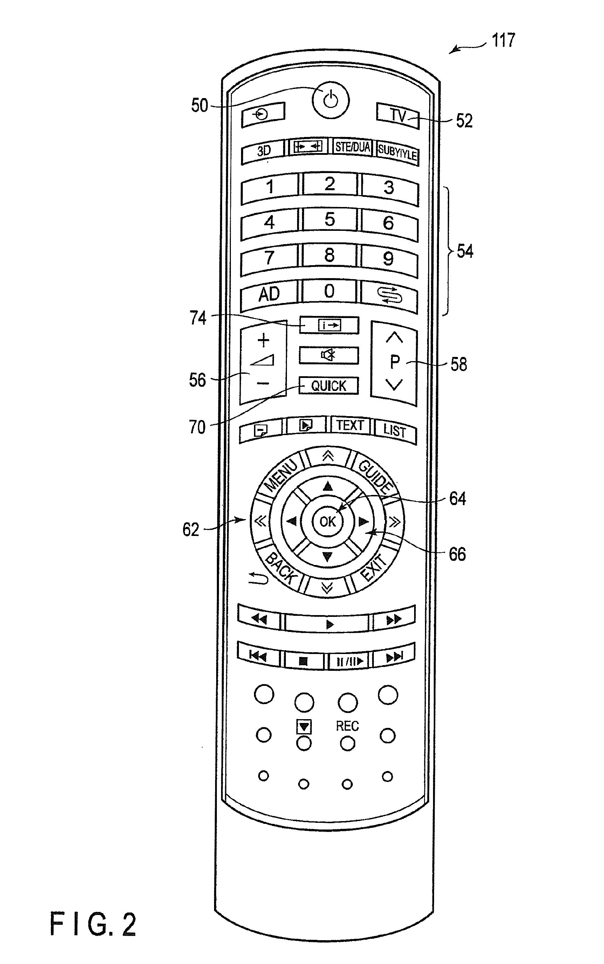

FIG. 2 is a plan view showing an external appearance of the remote controller 117. Mainly provided on the remote controller 117 are a power supply key 50, a broadcast switching key 52 of terrestrial digital broadcasting/BS/CS, a direct selection key 54, a volume control key 56, a channel up/down key 58, a multiple key 62, a determination key 64, a cursor key 66, a quick menu key 70, a program list key 72, and an i+ (i plus) key 74. If the quick menu key 70 is operated, a screen display key, a program explanation key, a mini program list key and a set key are displayed.

Concerning the cursor key 66, four portions thereof, i.e., upper, lower, left and right portions thereof can be pressed, and the cursor can be made to shift vertically and laterally in the screen in accordance with the pressed portion. Here, shift means movement of minimum unit, and the shift means movement to a next button in the menu, i.e., movement to a next block program in the electronic program list. Concerning the multiple key 62, total eight portions thereof, i.e., upper, lower, left and right portions thereof and diagonal four portions thereof can be pressed. If any of the upper, lower, left and right portions is pressed while the cursor is displayed, the cursor can be made to jump vertically or laterally, and if any of the diagonal portions is pressed, key operations similar to four keys, i.e., "menu", "guide", "exit" and "back" can be conducted. Here, jump means movement of cursor with unit greater than shift, and means switching a screen to another page. Hence, the term "cursor jump" and the term "switching of page" are used as the same meanings.

In the television receiving apparatus 10, if a user key-operates the program list key 72 of the remote controller 117, the electronic program list can be displayed on the display 114. This electronic program list is formed by the program list module 35e based on the EPG information which is program information previously acquired through a broadcast signal or a network. If the user further key-operates the "program list" key 72, a recorded program list can be displayed on the display 114. If the user further key-operates the "program list" key 72, the electronic program list can be displayed on the display 114.

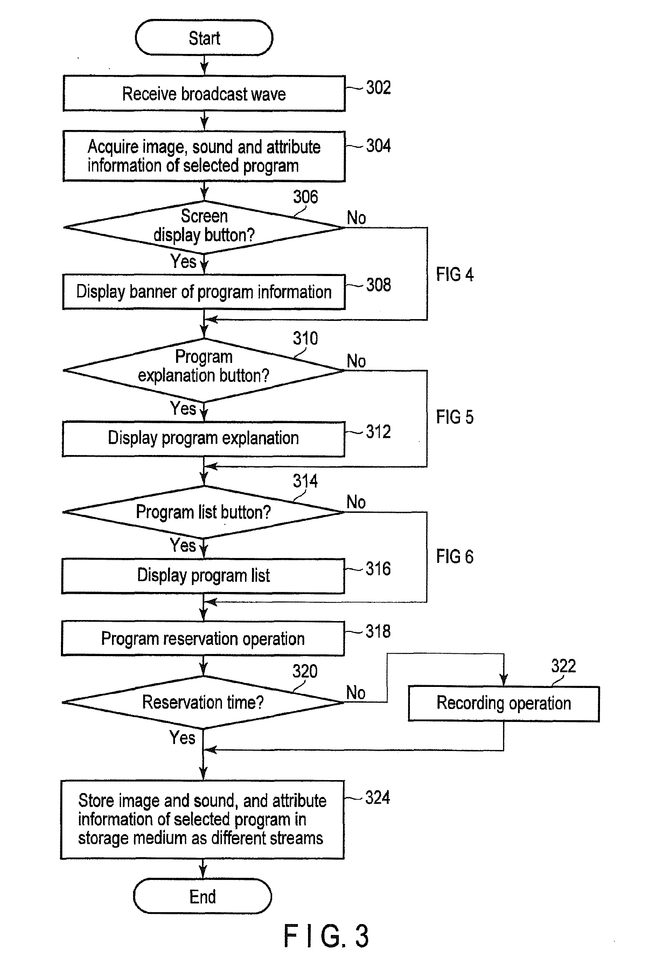

Next, one example of a flow of the recording processing of the television receiving apparatus 10 configured as described above will be described with reference to FIG. 3.

In block 302, a broadcast wave is received. Video, audio and attribute information of a selected program are acquired in block 304, and contents of the program are displayed. When there is restriction on viewing the program and the guidance type is 1, display of the program is strobe lighted or a text describing the viewing restriction is displayed in a superimposed manner on the display of the program in addition to a normal display of broadcast, and viewers are informed of guidance indicating that viewing of the program is restricted. When there is restriction on viewing a program and the guidance type is 0, if current time is other than a time period from 21:00 to 5:30, display of the program is strobe lighted or a text describing viewing restriction is displayed in the superimposed manner on the display of the program in addition to the normal display of broadcast, and viewers are informed of guide indicating that viewing of the program is restricted.

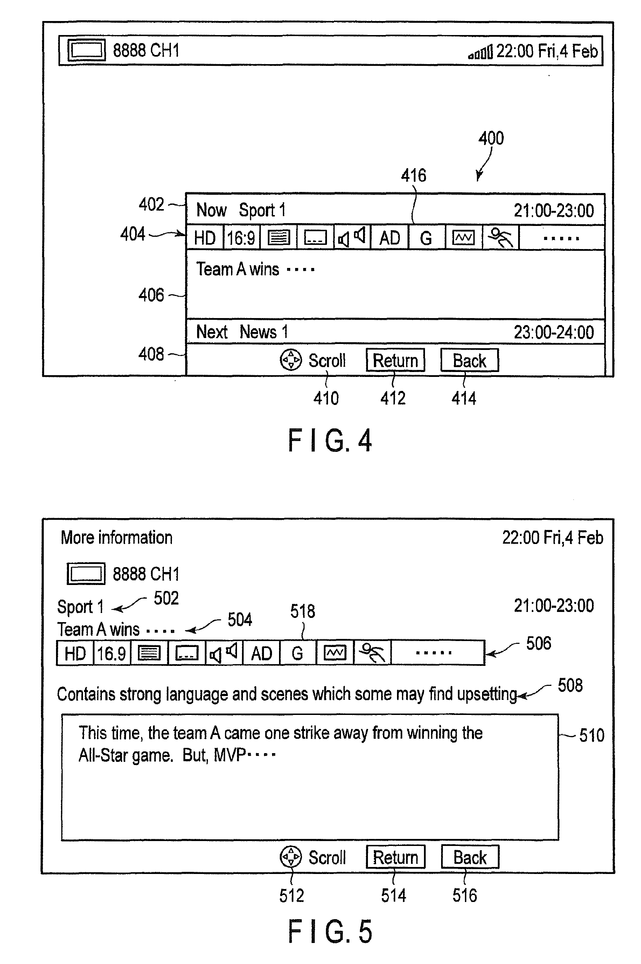

If it is detected in block 306 that a screen display button included in a quick menu is pressed, a banner of program information is displayed in block 308. One example of the banner display is shown in FIG. 4. A banner 400 is superimposed on the display screen of contents. The banner 400 includes a current program's name (also including broadcast time) 402, various icons 404, a simple explanation 406 of a program, a next program's name (also including broadcast time) 408 of that channel, a scroll button 410, a return button 412 and a back button 414. The various icons 404 include a viewing-restriction mark (G mark) 416 indicating that viewing of this program has been restricted, i.e., that a guidance descriptor is described in this program. The viewing-restriction mark 416 may be displayed in a highlighted manner such as strobe lighting. Display of the viewing-restriction mark 416 is varied in accordance with a value of the guidance type, and when the guidance type is 1, the viewing-restriction mark 416 is always displayed, and when the guidance type is 0, the viewing-restriction mark 416 is displayed only during a time period from 5:30 to 21:00. In the case of a program having no viewing-restriction, the G mark 416 is not displayed and this space becomes empty.

If it is detected in block 310 that the program explanation button included in a quick menu is pressed, the screen is switched to a program explanation screen in block 312. FIG. 5 shows one example of the program explanation screen. The program explanation screen basically includes program information shown in FIG. 4, and also includes detailed explanation of a program. That is, the program explanation screen includes a current program's name (also including broadcast time) 502, a simple explanation 504 of a program, various icons 506, a guidance message ("Contain strong language and scenes which some may find upsetting") 508, a detailed explanation 510 of a program, a scroll button 512, a return button 514 and a back button 516. The various icons 506 include a viewing-restriction mark (G mark) 518 indicating that viewing of this program has been restricted, i.e., that a guidance descriptor is described in this program. The guidance message 508 and the viewing-restriction mark 518 may be displayed in a highlighted manner such as strobe lighting. Displays of the guidance message 508 and the viewing-restriction mark 518 are varied in accordance with a value of the guidance type, and when the guidance type is 1, they are always displayed, and when the guidance type is 0, they are displayed only during a time period from 5:30 to 21:00. In the case of a program having no viewing-restriction, the G mark 518 is not displayed and this space becomes empty.

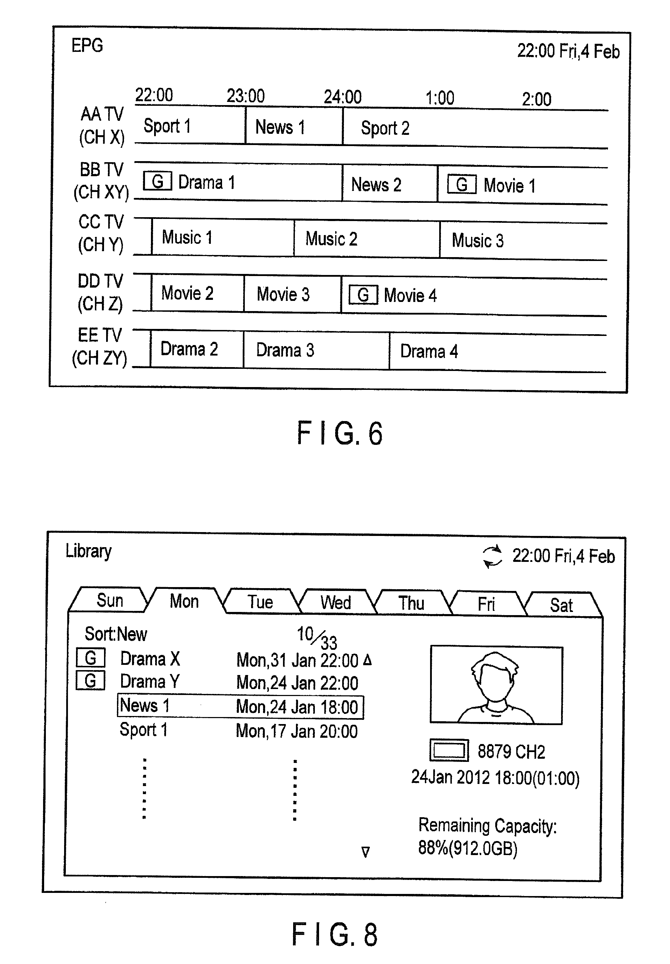

If it is detected in block 314 that the program list button 72 of the remote controller 117 is pressed once, the electronic program list is displayed in block 316. FIG. 6 shows one example of an electronic display list. In the electronic program list shown in FIG. 6, a vertical direction shows channels, a lateral direction shows time (starting from current time), block programs showing programs are arranged vertically and laterally and for example, there is employed a layout in which block programs of four hours and a half of five channels are arranged vertically and laterally. A laterally long block program having a length corresponding to time of the program includes a program's name, and when viewing of this program is restricted, this block program includes a specific mark, here, a G mark. As a technique for clearly showing a viewing-restricted program, it is possible not only to display the specific mark (G mark), but also to display in a highlighted manner such as strobe lighting, to change a shape (including double frame), a color, a font of a program's name, a color and a size of the font of a frame of the viewing-restricted program, to deviate a display position of the block program of the viewing-restricted program from a display position of other block programs, and to change a color and a shape of a cursor if the cursor is moved onto a block program of the viewing-restricted program. According to this, it is possible to discriminate a viewing-restricted program on the program list.

A recording reservation operation is carried out in block 318.

It is determined in block 320 whether it is reservation time. If it is reservation time, video, audio, and attribute information of the selected program are stored in the storage medium as different streams in block 324. It is unnecessary to store all the attribute information as different streams, and only a viewing-restriction flag indicative of presence or absence of a guidance descriptor and a guidance type may be stored in the storage medium as a stream which is different from the content data.

Even if it is not reservation time, if a recording operation of a program which is viewed is carried out in block 322, recording processing is executed in block 324.

As described above, in the embodiment, information indicative of whether viewing of a program is restricted is stored in the storage medium as a stream which is different from contents of a video. Hence, it is possible to tell presence or absence of the viewing-restriction without replaying recorded contents.

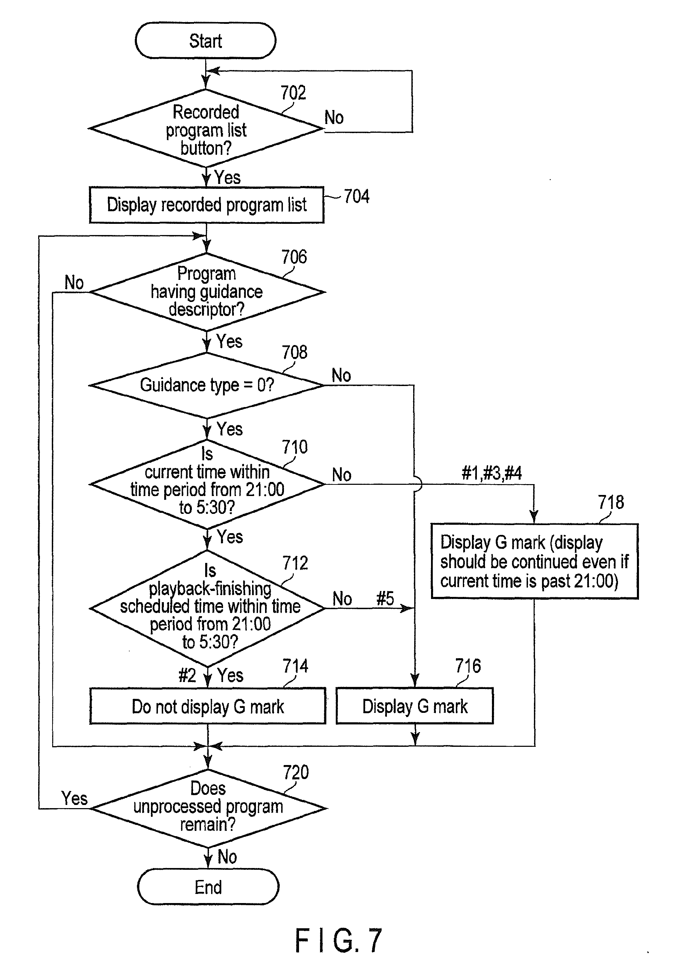

FIG. 7 is a flowchart showing one example of a flow of display processing of the recorded program list. If it is detected in block 702 that the program list button 72 of the remote controller 117 is pressed twice, the recorded program list is displayed in block 704. FIG. 8 shows one example of the recorded program list. Names of recorded programs and record-starting time are listed on a day of the week basis. The list order can be switched in new order, in old order and a broadcast channel order. Only programs with G mark or without G mark may be displayed. If the number of recorded programs is high, programs which could not be displayed can also be displayed by scrolling. A thumbnail (moving image) of a temporality selected program is displayed on a right side of the program list. A G mark is displayed for a viewing-restricted program like the electronic program list shown in FIG. 6. As a technique for clearly showing a viewing-restricted program in the recorded program list, like the case of the electronic program list, it is possible not only to display the specific mark (G mark), but also to display in a highlighted manner such as strobe lighting, to change a shape (including double frame), a color, a font of a program's name, a color and a size of the font of a frame of the viewing-restricted program, to deviate a display position of the block program of the viewing-restricted program from a display position of other block programs, and to change a color and a shape of a cursor if the cursor is moved onto a block program of the viewing-restricted program. Processing for displaying G mark in the recorded program list will be described below.

It is determined in block 706 whether a guidance descriptor is described in a program. If the guidance descriptor is described in the program, it is determined in block 708 whether the guidance type is 0. When the guidance type is 1, since it is regulated that guidance showing viewing-restriction exists is always displayed, the G mark is displayed in block 716.

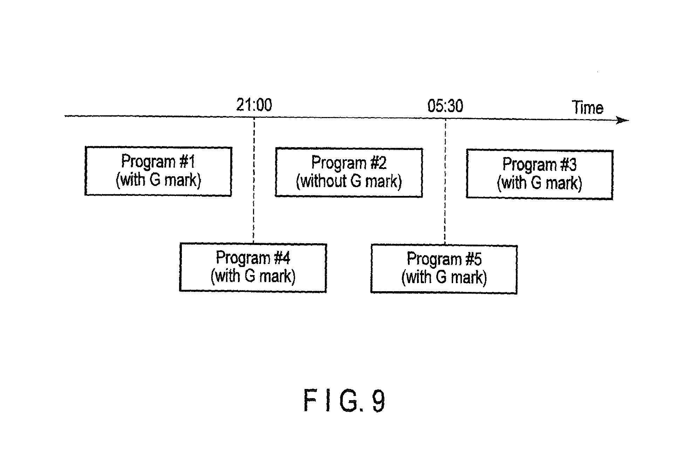

If the guidance type is 0, since display of the G mark is controlled in accordance with current time, it is determined in block 710 whether the current time is within guidance-unnecessary time period from 21:00 to 5:30. If it is determined that the current time is within the guidance-unnecessary time period, it is determined in block 712 whether playback-finishing scheduled time of the program is within the guidance-unnecessary time period if it is assumed that playback of the program is started from the current time and the program is normally played back to the end. If the current time and the playback-finishing scheduled time are within the guidance-unnecessary time period, it is determined in block 714 that the G mark is not displayed. This state (YES in both blocks 710 and 712) is a program #2 in FIG. 9.

If the current time is within the guidance-unnecessary time period but if the playback-finishing scheduled time of the program is out of the guidance-unnecessary time period (from 5:30 to 21:00), the G mark is displayed in block 716. That is, since it is expected that although the current time is within the guidance-unnecessary time period, it becomes the guidance-necessary time period while the program is played back. In this case, the guidance display is moved up (advanced guidance is displayed). This state (YES in block 710 and NO in block 712) is a program #5 in FIG. 9.

Programs in which the current time is within guidance-necessary time period (from 5:30 to 21:00) (NO in block 710) are programs #1, #3 and #4 in FIG. 9. In this case, since it is necessary to display guidance, a G mark is displayed in block 718. In this case, although it may become guidance-unnecessary time period during a playback in some cases as in the program #4, in this embodiment, if guidance is once displayed for a certain program, the guidance is not non-displayed. Hence, even if current time is past 21:00, display of block 718 is continued.

After block 714, 716 or 718, it is determined in block 720 whether unprocessed program remains, and if it remains, the procedure is returned to block 706.

According to this operation flow, when it is regulated that guidance (warning message) indicating that contents which adversely affect juveniles such as scene of violence are included in a program is displayed only for a necessary time period, even if that program is recorded, if even a part of a playback of the program is included in the guidance-necessary time period or if it is expected that even the part of the playback of the program included in the guidance-necessary time period in accordance with a playback time and a playback time period of the program, the guidance can be displayed in the recorded program list. As described above, by displaying guidance as much as possible, it is possible to reduce, as much as possible, chances to watch inappropriate programs.

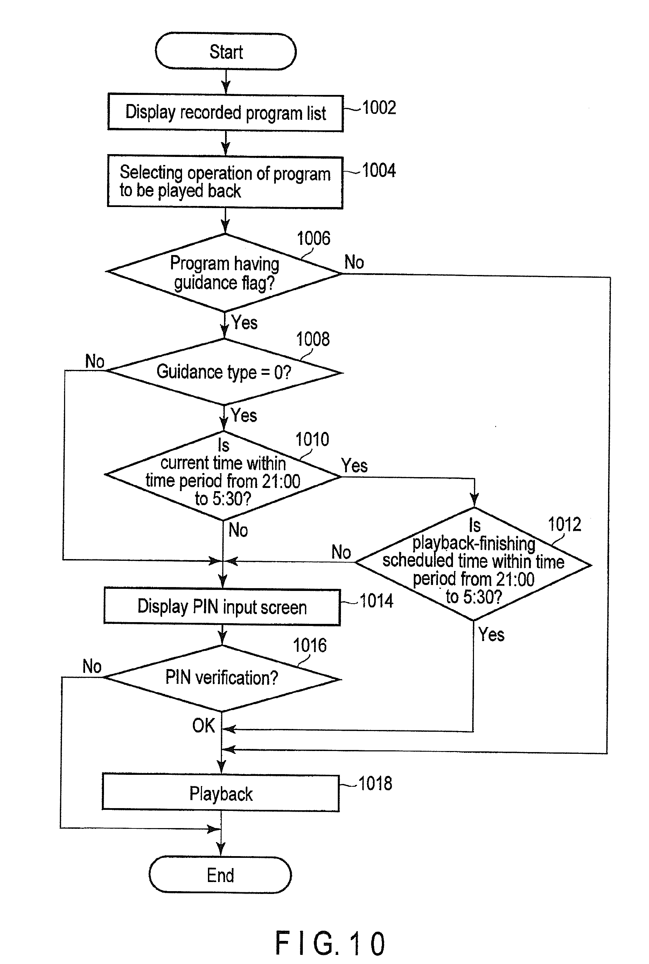

Viewers are permitted to view a viewing-restricted program after his or her age is verified by the PIN input, and the viewers are also required to do the same thing for playing back a recorded program. Playback processing of a recorded viewing-restricted program will be described with reference to FIG. 10.

A recorded program list as shown in FIG. 8 for example is displayed in block 1002. A program to be played back is selected in block 1004.

It is determined in block 1006 whether a guidance descriptor is described in the program. When the guidance descriptor is not described in the program, the playback processing of block 1018 is started without carrying out the PIN input. If the guidance descriptor is described in the program, it is determined in block 1008 whether the guidance type is 0. If the guidance type is 1, since it is regulated that the PIN input is always required, a PIN input screen is displayed in block 1014, and the viewer is required to carry out the PIN input.

When the guidance type is 0, since the display of the PIN input screen is controlled in accordance with the current time, it is determined in block 1010 whether the current time is within the guidance-unnecessary time period (from 21:00 to 5:30). When the current time is out of the guidance-unnecessary time period (within guidance-necessary time period from 5:30 to 21:00), the PIN input screen is displayed in block 1014, and the viewer is required to carry out the PIN input.

When the current time is within the guidance-unnecessary time period, it is determined in block 1012 whether the playback-finishing scheduled time of the program is within the guidance-unnecessary time period when it is assumed that the playback of that program is started from the current time and the program is normally played back to the end. When the playback-finishing scheduled time is out of the guidance-unnecessary time period (within guidance-necessary time period from 5:30 to 21:00), the PIN input screen is displayed in block 1014, and the viewer is required to carry out the PIN input. According to this, the PIN input is required also for playing back the program #5 in FIG. 9. When both the current time and the playback-finishing scheduled time are within the guidance-unnecessary time period from 21:00 to 5:30 (YES in both blocks 1010 and 1012), the playback processing in block 1018 is started without displaying the PIN input screen.

According to this operation flow, when it is expected that even a part of a playback of a program is included in the guidance-necessary time period, the PIN input screen can be displayed. As described above, by requiring the PIN input as much as possible, it is possible to reduce, as much as possible, chances to view inappropriate programs.

As described above, according to the embodiment, the recorded program list display module lists the information concerning recorded programs together with discrimination display of viewing-restriction. Therefore, it is possible to determine whether viewing of the recorded program is restricted from the recorded program list even if the recorded program is not actually played back.

Although the function capable of displaying the viewing-restricted program in the program list or the recorded program list such that the program can be discriminated in the above description, this function can temporarily be turned off if a viewer selects to do so.

## Claims

1. An image display apparatus **characterized by** comprising:
a recording controller (35c) configured to record a broadcast program; and
a list display (35) configured to display a list of information related to a recorded program wherein the information is displayed with discrimination display of viewing-restriction.

2. The image display apparatus of Claim 1, **characterized in that** the recording controller is configured to store program content information and information concerning viewing-restriction as different streams.

3. The image display apparatus of Claim 1, **characterized in that** the broadcast program comprises information indicating that the information is to be displayed with the discrimination display of viewing-restriction only for a certain time period.

4. The image display apparatus of Claim 3, **characterized in that**, when the information indicates that the information is to be displayed with the discrimination display of viewing-restriction only for the certain time period, the list display is configured not to display the information with the discrimination display of viewing-restriction if current time and playback-finishing scheduled time of the recorded program are out of the certain time period.

5. The image display apparatus of Claim 3, **characterized in that**, when the information indicates that the information is to be displayed with the discrimination display of viewing-restriction only for the certain time period, the list display is configured to display the information with the discrimination display of viewing-restriction, if a current time is out of the certain time period and a playback-finishing scheduled time of the recorded program is within the certain time period.

6. The image display apparatus of Claim 3, **characterized in that**, when the information indicates that the information is to be displayed with the discrimination display of viewing-restriction only for the certain time period, the list display is configured to display the information with the discrimination display of viewing-restriction if a playback-start time of the recorded program is within the certain time period, and the list display is configured to continue display of the information with the discrimination display of viewing-restriction even if a playback time of the recorded program is out of the certain time period.

7. The image display apparatus of Claim 1, **characterized in that** the list display is configured to be controlled by a user operation to temporarily stop display of the list.

8. The image display apparatus of Claim 3, **characterized by** further comprising:
an input screen display (35) configured to display an input screen of an identification number of a user if a playback of a recorded viewing-restricted program is instructed; and
a permitting controller (35) configured to permit a playback based on an input identification number, wherein
the input screen display is configured to display the input screen of identification number if at least one of a current time and playback-finishing scheduled time is within the certain time period, and
the input screen display is configured not to display the input screen of identification number if the current time and the playback-finishing scheduled time are out of the certain time period.

9. An image display method **characterized by** comprising:
recording a broadcast program; and
displaying a list of information related to a recorded program wherein the information is displayed with discrimination display of viewing-restriction.
